# EUROPÄISCHE PATENTSCHRIFT

(11) **EP 1 669 499 B1**
(45) Veröffentlichungstag und Bekanntmachung des Hinweises auf die Patenterteilung: **15.08.2007**
(21) Anmeldenummer: 04029033.0
(22) Anmeldetag: 08.12.2004
(51) Int. Cl.: E03F 5/10, F16K 31/30, F16K 31/528

(54) **Vorrichtung zur Regelung eines konstanten Abflusses aus einem Flüssigkeitsbehälter**
Device for ensuring a constant outflow from a fluid recipient
Dispositif pour assurer un débit constant d'un réservoir pour fluide

(43) Veröffentlichungstag der Anmeldung: 14.06.2006
(73) Patentinhaber: Steinhardt GmbH, 65232 Taunusstein (DE)
(72) Erfinder: Stiehl, Oliver, 65191 Wiesbaden (DE); Heep, Thomas, 65589 Hadamar Steinbach (DE); Steinhardt, Jörg-Michel, Dipl.-Ing., 65232 Taunusstein (Seitzenhahn) (DE)
(74) Vertreter: Quermann, Helmut

(56) Entgegenhaltungen:
- DE-A1- 3 240 902
- DE-A1- 3 418 348
- DE-A1- 3 822 555
- DE-A1- 3 921 766
- DE-U1- 29 920 430
- FR-A- 2 675 562

## Beschreibung

Die Erfindung betrifft eine Vorrichtung zur Regelung eines konstanten Abflusses aus einem Flüssigkeitsbehälter, insbesondere einem Regenrückhalteraum, mit einer Auslauföffnung für die Flüssigkeit, wobei der Auslauföffnung eine geradlinig bewegliche Blende zugeordnet ist, die in Abhängigkeit vom Flüssigkeitsspiegel den Auslauf der Flüssigkeit aus dem Behälter regelt, wobei ein in Abhängigkeit vom Flüssigkeitsdruck oder dem Flüssigkeitseinstau im Flüssigkeitsbehälter positionsveränderliches Bauteil die Blende über eine Kurve ansteuert und die Abblendbewegung der Blende gegen eine Rückstellkraft erfolgt, sowie ein um eine Achse drehbares Steuerelement die Kurve aufweist, wobei die Kurve dem Umsetzen der Drehbewegung des Steuerelements in die geradlinige Bewegung der Blende dient.

Bei Regenrückhalteräumen und anderen Speicherräumen wird die ablaufende Wassermenge im Allgemeinen durch Veränderung der Querschnittsfläche der Auslauföffnung geregelt. Das Abblenden der Auslauföffnung darf jedoch nicht direkt proportional der Wasserhöhe erfolgen, sondern muss mit zunehmender Stauhöhe gesteuert werden, in Richtung auf eine weniger rasche Abblendung.

Vorrichtungen zur Regelung eines konstanten Abflusses aus einem Flüssigkeitsbehälter sind aus dem Stand der Technik in vielfältiger Art und Weise bekannt. Sie bedienen sich meistens eines Schwimmers, somit eines in Abhängigkeit vom Flüssigkeitseinstau im Flüssigkeitsbehälter positionsveränderlichen Bauteils. Der Schwimmer betätigt über ein Gestänge oder dergleichen die Blende, die die Funktion des Drosselorgans aufweist.

Eine Vorrichtung der eingangs genannten Art ist aus DE 32 40 902 A1 bekannt. Bei dieser ist die Blende in vertikaler Richtung vor und über der Auslauföffnung geführt. Der Schwimmer ist über eine Schwimmerstange um eine stationäre horizontale Achse schwenkbar gelagert. Drehfest ist mit der Schwimmerstange im Bereich deren Schwenklagers eine Steuerscheibe mit an deren Umfang befindlicher Kurve verbunden. Auf der Kurve, die sich über einen Teilkreis erstreckt, reitet eine Abwinklung einer Führungsstange, die die Blende aufnimmt. Der Hub der Führungsstange wird somit über die von dem Schwimmer angetriebene Steuerscheibe geregelt. Für den Fall, dass hohe Wasserstände zu beherrschen sind, wird vorgeschlagen, eine Regelung vorzusehen, bei der mehrere voneinander unabhängige Schwimmer mit übereinander angeordneten Steuerscheiben zusammenwirken. Die Führungsstange ist in diesem Falle entsprechend verlängert und weist in Höhe der Steuerkurve jeder Steuerscheibe einen Kurvenreiter auf. - Eine solche Vorrichtung ist baulich sehr aufwendig gestaltet. Sie ermöglicht überdies nicht eine exakte Regelung des konstanten Abflusses bei großen Stauhöhen.

Eine Vorrichtung der eingangs genannten Art ist ferner aus der DE 34 18 348 A1 bekannt. Dort weist die Kurve des drehbaren Steuerelementes eine sich über einen Teilkreis erstreckende Kurve auf, die dem Umsetzen der Drehbewegung des Steuerelements in die gradlinige Bewegung der Blende dient. Hierzu reitet eine Abwinklung einer Führungsstange, die die Blende aufnimmt, auf der Kurve. Ein nach innen gewölbter Abschnitt des Steuerelementes ist nicht für das Umsetzen der Drehbewegung des Steuerelements geeignet. Demzufolge wird auch bei dieser Vorrichtung das Steuerelement, bezogen auf dessen Steuerelementachse, nur über den Winkel eines Teilkreises bewegt.

In der EP 0 707 254 A2 ist eine Vorrichtung der eingangs genannten Art beschrieben, bei der die Blende von einem in Abhängigkeit vom Flüssigkeitsdruck positionsveränderlichen Bauteil über eine Kurve angesteuert wird. Dort ist ein Faltenbalg vorgesehen, der im Bereich seines einen Endes stationär gelagert ist, und dessen anderes Ende ein plattenförmiges Steuerelement aufnimmt, das mit einer Kurve versehen ist, wobei diese Kurve durch eine Flanke eines Steuerschlitzes des Steuerelements gebildet ist. Die Blende ist vertikal geführt gelagert, wobei ein mit der Blende verbundener horizontaler Zapfen in den Steuerschlitz eingreift. Eine horizontale Verfahrbewegung des Steuerelements beim Ausdehnen bzw. Zusammenziehen des Faltenbalges führt demzufolge zu einer vertikalen Bewegung der Blende in der einen oder anderen Richtung. - Nachteilig ist bei dieser Vorrichtung insbesondere, dass die horizontale Verschiebung des Steuerelements, die an die Verschiebung des Faltenbalgs gekoppelt ist, keine genaue Regelung des konstanten Abflusses ermöglicht. Dies ist insbesondere deshalb der Fall, weil die Kurve eine zu geringe Steuerlänge aufweist.

Weitere Vorrichtungen zur Regelung eines konstanten Abflusses aus einem Flüssigkeitsbehälter, insbesondere einem Regenrückhalteraum, sind aus der DE 39 21 766 A1, DE 38 22 555 A1, DE 299 20 430 U1 und der FR 2 675 562 A bekannt. Bei diesen erfolgt die Regelung der Blende über eine Kurve, die Bestandteil eines Steuerelementes ist, wobei das Steuerelement, bezogen auf dessen Steuerelementachse, allerdings nur über den Winkel eines Teilkreises bewegt wird.

Es ist Aufgabe der vorliegenden Erfindung, eine Vorrichtung der eingangs genannten Art so weiterzubilden, dass diese, bei geringem Bauaufwand und geringen baulichen Abmessungen, eine präzise Regelung des konstanten Abflusses aus dem Flüssigkeitsbehälter, auch bei großen Stauhöhen, gewährleistet.

Gelöst wird die Aufgabe bei einer Vorrichtung der eingangs genannten Art dadurch, dass sich die Kurve, bezogen auf die Steuerelementachse, über einen Winkel von mindestens 360° erstreckt.

Bei der erfindungsgemäßen Vorrichtung findet somit ein um eine Achse drehbares Steuerelement Verwendung, das die sich über einen Winkel von mindestens 360° erstreckende Kurve aufweist. Diese in das Steuerelement integrierte Kurve ermöglicht es, über eine große Länge der Kurve, die detaillierte Regelung des konstanten Abflusses aus dem Flüssigkeitsbehälter zu bewerkstelligen. Grundsätzlich kann die Länge der Kurve beliebig groß sein. Es wird es als besonders vorteilhaft angesehen, wenn die Kurve, bezogen auf die Steuerelementachse, sich über einen Winkel von 360° bis 460° erstreckt.

Die erfindungsgemäße Vorrichtung findet vorzugsweise bei Konstruktionen mit Schwimmern oder Druckreglern Verwendung, insbesondere bei Druckreglern.

Das drehbare Steuerelement, das die Kurve aufweist, kann unterschiedlichst gestaltet sein. Bei einer bevorzugten Ausführungsform ist vorgesehen, dass das Steuerelement als Scheibe mit spiralförmig zur Drehachse der Scheibe angeordneter Kurve ausgebildet ist. Das Steuerelement kann sich so als einfacher, flacher, plattenförmiger Körper darstellen. Die Kurve kann besonders einfach in die Scheibe integriert werden, indem die Scheibe mit einem umlaufenden Schlitz oder einer umlaufenden Nut versehen ist, wobei eine Flanke des Schlitzes bzw. der Nut die Kurve bildet. Alternativ, und dies wird gleichfalls als bevorzugt angesehen, ist das Steuerelement als rotationssymmetrischer Körper ausgebildet, mit am radialen Umfang angeordneter und sich in Radial- und Axialrichtung des Körpers erstreckender Kurve. Bei Gestaltung des Steuerelements als rotationssymmetrischer Körper wird es als besonders vorteilhaft angesehen, wenn dieser eine umlaufende Nut aufweist und eine Flanke der Nut die Kurve bildet.

Die dem drehbaren Steuerelement zugeordneten Kurve ermöglicht es Verfahrwege der Blende im Bereich von Zehntel mm darzustellen. Mittels großer Verfahrwege der Kurve, die sich beispielsweise über einen Drehwinkel von 460° erstrecken, lassen sich große Stauhöhen umsetzen. Über die Steuerkurve erfolgt die Regelung bei geringem Kraftaufwand. Die Gestaltung der Krümmung der Kurve ergibt sich aus den physikalischen Gegebenheiten.

Die Kurve ist bevorzugt so gestaltet, dass eine Umlegung von dem Verfahrensweg des Schwimmers oder Druckreglers auf die proportionale Wegbeschreibung der Kurve erfolgt, und zwar im Zehntel Millimeter-Bereich. Hierdurch ist eine Regelung von großen Stauhöhen über die jetzt mögliche Weglänge der Kurve erst umsetzbar. Durch die spezielle Form der Kurve, insbesondere die Schneckenform oder die Gewindeform, wird der Kraftaufwand auf eine Steuerrolle, die mit der Kurve bzw. der Flanke des Nuts / Schlitzes zusammenwirkt, wesentlich verringert, und es ist infolge dessen möglich, die Bauweise kompakt zu gestalten und die mechanische Reibung sehr gering zu halten.

Durch diesen Effekt kann die konstruktive Auslegung der Vorrichtung vereinfacht werden. Durch die Kraftkurve ist es möglich, erstmals Schwimmertechniken zu verwenden, die unmittelbar mit der Kurve ohne Hebelarm verbunden sind. Durch die spezielle Form der Steuerkurve ist eine Verfahrensform möglich, die gewährleistet, ein Diagramm in der Steuerkurve zu verwirklichen, dass die gesamten Parameter der geforderten Stauhöhen abfahren kann. Dies wird durch den großen Drehbereich, beispielsweise von 460°, der Kurve erreicht. Die Bearbeitung gleicher Koordinaten in einer Vertikalregler-Kurve ist nicht möglich, da dort nur ein Drehbereich, der sich über einen wesentlich geringeren Winkelabschnitt erstreckt, zur Verfügung steht und damit das Diagramm in der gleichen Ausführungsform wie bei der erfindungsgemäßen Kurve Verfahrenwege aufweisen würde, die mechanisch nicht zu realisieren sind.

Aufgrund der sehr großen Kurvenlänge kann der Regler mit einer sehr hohen Genauigkeit betrieben werden. In den einzelnen Regelstellungen verfährt die Blende mit geringer Toleranz und somit mit geringen Sollwert-Abweichungen. Bedingt durch den gut verfahrbaren Radius der Kurve können jetzt auch Sonderanforderungen realisiert werden, wie zum Beispiel besonders große Stauhöhen.

In Verbindung mit einer vertikalen Schwimmeranordnung ist es möglich, bei der Kurve ein maximales Stauziel zu erreichen, ohne eine Einschränkung durch einen Zwickelbereich zu erhalten. Bedingt ist dies dadurch, dass der Schwimmer proportional mit dem Wasserspiegel steigt und durch den Wasserdruck kontinuierlich mit der Öffnung des Reglers über die Blende gesteuert wird. Alternativ kann die Kurve ohne weiteres über einen Druckaufnehmer betrieben werden.

Bei der Vorrichtung wird die Blende insbesondere vertikal verfahrbar geführt. Sie liegt somit unter ihrem Eigengewicht über mittels einem mit der Blende verbundenem Koppelelement an der Kurve an und wird, entsprechend der jeweiligen Drehposition des Steuerelements und damit relativ veränderter Position der Kurve mehr oder weniger angehoben bzw. abgesenkt. Eine untere Steuerkante der Blende ist vorteilhaft im wesentlichen gerade und horizontal angeordnet ausgebildet. Es ist durchaus denkbar, die untere Steuerkante entsprechend konkreten, gewünschten Abblendverhältnissen mit einer mehr oder weniger in den Querschnitt der Auslauföffnung ragenden Krümmung zu versehen.

Wie vorstehend bereits angedeutet, ermöglicht es die Erfindung in besonders vorteilhafter Art und Weise die Blende mittels einer in Abhängigkeit vom Flüssigkeitsdruck formveränderlichen Einrichtung über die Kurve anzusteuern. Diese Einrichtung weist insbesondere das geradlinig verfahrbare, somit positionsveränderliche Bauteil auf, das die Stellbewegung über Übertragungsmittel in eine Drehbewegung des Steuerelements umwandelt. Diese Übertragungsmittel können auf unterschiedlichste Art und Weise gestaltet sein, beispielsweise als Seil, miteinander kämmende Zahnräder, Riemenräder und dergleichen. Durch die Anordnung der Zahnräder oder Riemenräder kann auf besonders einfache Art und Weise das Übersetzungsverhältnis sowie der Kraftaufwand verändert werden. Es wird als besonders vorteilhaft angesehen, wenn das Übertragungsmittel als in sich geschlossener, umgelenkter Seilzug ausgebildet ist, wobei mit einem Seilabschnitt des Seilzugs das Stellglied verbunden ist und mit einer drehbaren Umlenkrolle für den Seilzug das Steuerelement verbunden ist. Hierdurch ist bei baulich einfachster Ge-staltung ein einfaches Übertragen der Bewegung des Stellglieds auf die Umlenkrolle möglich.

Es wird als besonders vorteilhaft angesehen, wenn auf die Blende, mit Wirkrichtung in der Öffnungsrichtung der Blende, ein Gegengewicht einwirkt. Hierdurch ist sichergestellt, dass die Blende relativ gewichtsneutral mit der Kurve des Steuerelements zusammenwirkt. Reibungseinflüsse können somit weitgehend vernachlässigt werden.

Das in Abhängigkeit vom Flüssigkeitsdruck formveränderliche Element ist insbesondere als hydrostatischer Wandler mit Rollmembran ausgebildet. Der hydrostatische Wandler weist insbesondere einen Zylinder und in diesem über die Rollmembran abgedichtet geführten Kolben auf. Im Zylinder sind vorzugsweise Federmittel gelagert, die entgegen der Wirkrichtung des Kolbens zum Verschieben der Blende in deren Abblendrichtung auf den Kolben einwirken. Nimmt der von dem formveränderlichen Bauteil registrierte hydrostatische Druck wieder ab, bewirken die Federmittel das Verschieben des Kolbens in Öffnungsrichtung der Blende. Da die Federrate sich mit der Stauhöhe in aller Regel ändert, wird die Federrate der Federmittel vorzugsweise auf die maximale Stauhöhe der Vorrichtung abgestimmt.

Eine besonders genaue Regelung lässt sich mit dem formveränderlichen Element erzielen, wenn dieses auf seiner Unterseite eine Einlassöffnung für den hydrostatischen Druck aufweist. Bereits bei einem sehr geringen Einstau von Flüssigkeit im Flüssigkeitsbehälter beginnt somit der Regelungsvorgang.

Derjenige Zylinderraum der in Abhängigkeit vom Flüssigkeitsdruck formveränderlichen Einrichtung, der dem Zylinderraum, der die Einlassöffnung für den hydrostatischen Druck aufweist, abgewandt ist, ist vorteilhaft mit einem Zugang für eine externe Luftleitung versehen. Dies ermöglicht es, bei einer Verlegung der Auslauföffnung, extern einen erhöhten Luftdruck auf den der Luftleitung zugeordneten Zylinderraum aufzugeben, mit der Folge, dass die Blende in die Position überführt wird, in der sie die Auslauföffnung völlig frei gibt, so dass die Verlegung durch Fortschwemmen behoben werden kann.

Die Verlegungsbeseitigung kann durchaus auch dadurch erfolgen, dass die Vorrichtung in einem Schottbehälter angeordnet wird, der mit einer Zulauföffnung für die Flüssigkeit und einer Auslauföffnung für die Flüssigkeit versehen ist, wobei der Auslauföffnung die Blende und der Zulauföffnung eine weitere Blende zugeordnet ist, sowie das positionsveränderliche Bauteil beide Blenden ansteuert. Es ist insbesondere daran gedacht, dass auch diese weitere Blende entsprechend der vorstehend zur Erfindung grundsätzlich beschriebenen Blende beweglich und auch in diesem Sinne angesteuert wird. Wird die Zulauföffnung verlegt, sinkt das Flüssigkeitsniveau im Schottbehälter und damit der statische Druck. Das positionsveränderliche Bauteil steuert infolgedessen beide Blenden im Sinne einer Öffnungsbewegung an, womit die Verlegung beseitigt wird.

Mit der erfindungsgemäßen Vorrichtung lässt sich auf einfache Art und Weise, selbst bei einem Einstau in einem Unterwasser ein konstanter Abfluss aus dem Oberwasser, dem die Vorrichtung zugeordnet ist, sicherstellen. In diesem Fall wird unterwasserseitig ein weiterer, in Abhängigkeit vom Flüssigkeitsdruck des Unterwassers angesteuerter hydrostatischer Wandler angeordnet, wobei die externe Luftleitung des oberwasserseitigen Wandlers mit dem Zylinderraum des unterwasserseitigen Wandlers verbunden ist, die dem Zylinderraum des unterwasserseitigen Wandlers, der die Einlassöffnung für den hydrostatischen Druck des Unterwassers aufweist, abgewandt ist. Bei Normalbetrieb, d. h. keinem Rückstau, im Unterwasser kann die Flüssigkeit durch die definierte Regelöffnung ungehindert fließen. Die Ansteuerung der Blende erfolgt durch den oberwasserseitigen hydraulischen Wandler, mangels Rückstau ermittelt der unterwasserseitige hydraulische Wandler keine Druckerhöhung. - Der bei einem Rückstau erzeugte Gegendruck im Oberwasser bewirkt, dass der geforderte konstante Abfluss aus dem Flüssigkeitsbehälter des Oberwassers bei der Normalstellung der Regelöffnung gemindert wird. Mittels des im Unterwasser installierten hydrostatischen Wandlers, der nunmehr den erhöhten Druck in Unterwasser ermittelt, erfährt der im Oberwasser installierte hydrostatische Wandler eine Umkehrfunktion, so dass der konstante Abfluss gehalten werden kann.

Insbesondere dann, wenn bei der Vorrichtung ein Druckregler Verwendung findet, somit keine Schwimmersteuerung vorzusehen ist, besteht die Möglichkeit, die Vorrichtung baulich sehr kompakt zu gestalten. Dies ermöglicht es, die Vorrichtung insgesamt in einem Gestell zu lagern. Die Vorrichtung kann deshalb an einem Ort außerhalb des Flüssigkeitsbehälters vormontiert werden und es besteht die Möglichkeit, sie dann, auf dem Gestell angeordnet, insgesamt in den gewünschten Bereich des Flüssigkeitsbehälters zu verbringen.

Mehrere beispielhafte Ausführungsformen werden nachfolgend unter Hinweis auf die Zeichnung näher erläutert. Es zeigen:
- Figur 1: eine Frontansicht einer ersten Ausführungsform der erfindungsgemäßen Vorrichtung,
- Figur 2: eine räumliche Ansicht der in Figur 1 gezeigten Vorrichtung, schräg von vorne und oben gesehen,
- Figur 3: eine räumliche Ansicht der bei der Ausführungsform nach den Figuren 1 und 2 Verwendung findenden Scheibe als Steuerelement,
- Figur 4: eine gegenüber der Ausführungsform nach Figur 1 geringfügig modifizierte Ausführungsform, in einer Vorderansicht,
- Figur 5: eine Ansicht der Ausführungsform nach Figur 4, schräg von vorne und oben gesehen,
- Figur 6: einen Vertikalschnitt, durch den bei den Ausführungsformen nach den Figuren 1 bis 5 Verwendung findenden Druckregler, der als hydrostatischer Wandler mit Rollmembran ausgebildet ist,
- Figur 7: eine räumliche Ansicht des in Figur 6 gezeigten Druckreglers, schräg von vorne und oben gesehen,
- Figur 8: eine gegenüber der Ausführungsform nach den Figuren 6 und 7 geringfügig modifizierte Ausführungsform eines Druckreglers, in einem Vertikalschnitt,
- Figur 9: den in Figur 8 veranschaulichten Druckregler in einer räumlichen Ansicht, schräg von der Seite und oben gesehen,
- Figuren 10 bis 12: unterschiedliche Darstellungen einer Anordnung, die die erfindungsgemäße Vorrichtung umfasst und der Rückstauerkennung dient, veranschaulicht für die Situation des Normalbetriebs,
- Figuren 13 und 14: die in den Figuren 10 bis 12 gezeigte Anordnung für die Situation des Rückstaus und
- Figuren 15 und 16: eine Einrichtung, bei der die erfindungsgemäße Vorrichtung Verwendung findet und die der Verlegungsbeseitigung dient.

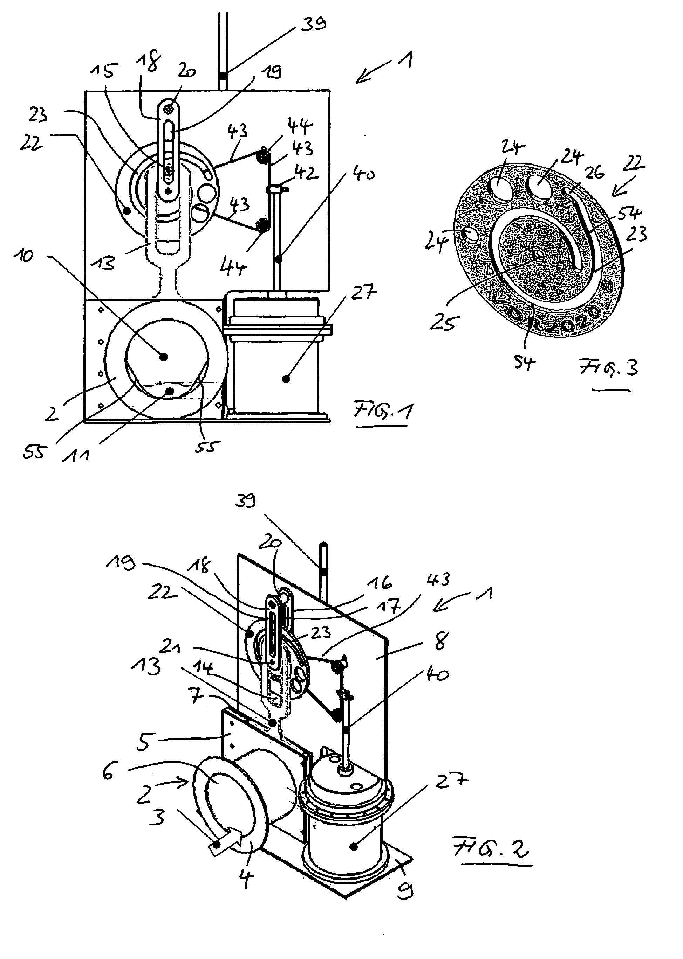

Gezeigt sind zur ersten Ausführungsform nach den Figuren 1 bis 3 die wesentlichen Bauteile die die Vorrichtung 1 zur Regelung des konstanten Abflusses aus einem Flüssigkeitsbehälter, insbesondere einem Regenrückhalteraum bilden. Der Regenrückhalteraum selbst ist nicht veranschaulicht, sondern hierzu nur ein Flanschstutzen 2, durch den die Flüssigkeit beim Verlassen des Flüssigkeitsbehälters in Richtung des Pfeils 3 austritt. Der Flüssigkeitsstutzen 2 ist in eine nicht gezeigte Wandung des Flüssigkeitsbehälters eingebettet und befindet sich im Bereich der Sohle des Behälters. Mit dem dem eigentlichen Flanschring 4 des Flanschstutzens 2 abgewandten Ende des Flanschstutzens 2 ist mit diesem eine Platte 5 verschweißt, die mit einer Kreisöffnung versehen ist, deren Durchmesser dem Öffnungsdurchmesser 6 des Flanschstutzens 2 entspricht. Der Flanschstutzen 2 und die Platte 5 bilden eine Baueinheit. Parallel zur Platte 5 und in geringfügigem Abstand zu dieser ist eine weitere Platte 7 positioniert, die entsprechend der Platte 5 dimensioniert ist, somit eine entsprechende Öffnung aufweist. Diese Platte 7 ist mit einer größeren Lagerplatte 8 verschweißt, die genauso wie die beiden Platten 5 und 7 vertikal positioniert ist und mit einer horizontalen unteren Grundplatte 9 verschweißt ist. Die Lagerplatte 8 ist mit einer mit den Öffnungen in den Platten 5 und 7 fluchtenden Öffnung versehen. Austretende Flüssigkeit tritt somit durch den Flanschstutzen 2 und die Öffnungen in den beiden Platten 5 und 7 sowie die Öffnung in der Lagerplatte 8 aus dem Flüssigkeitsbehälter.

Der Spaltraum zwischen den beiden Platten 5 und 7 dient der Aufnahme einer plattenförmigen Blende 10. Dies ist beispielsweise, wie in der Figur 1 veranschaulicht, unten v-förmig gestaltet. Die Regelöffnung der Vorrichtung 1 ist mit der Bezugsziffer 11 bezeichnet. In der vollständig abgesenkten Stellung der Blende 10, wie es in den Figuren 1 und 2 verdeutlicht ist, ist zwischen den V-förmigen Schenkeln der Blende 10 nur ein geringer Durchtrittsquerschnitt für die Flüssigkeit gebildet. Bei vollständig angehobener Position gibt die Blende 10 den Öffnungsdurchmesser 6 weitgehend frei, womit sich eine große Regelöffnung 11 ergibt.

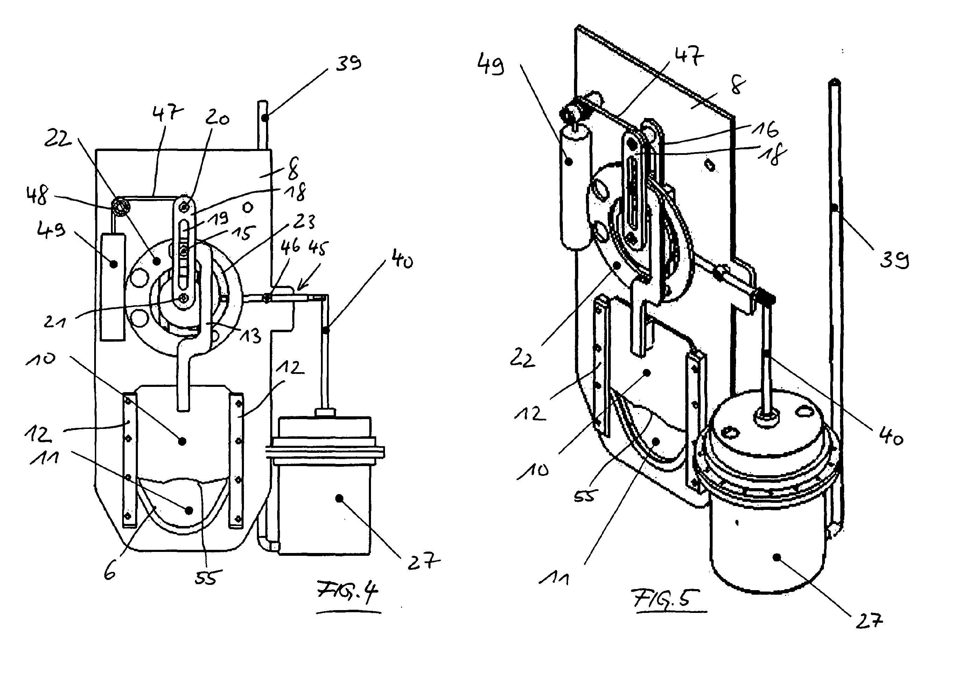

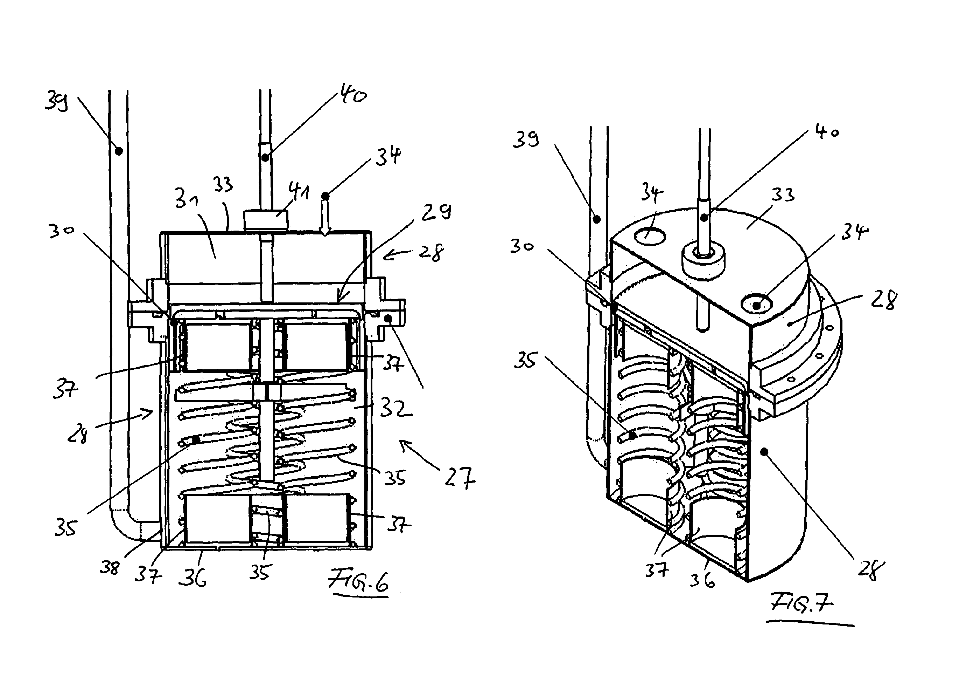

Die beiden Platten 5 und 7 dienen somit der Führung der Blende 10 in Ausströmrichtung der Flüssigkeit. Seitliche Führungen 12, wie sie zu der anderen Ausführungsform gemäß den Figuren 4 und 5 dargestellt sind, führen die Blende 10 zu beiden Seiten vertikal.

Diese beiden Führungen sind mit der Platte 7 befestigt und parallel zueinander angeordnet.

Die Blende 10 ist somit geradlinig und vertikal verfahrbar. Im Bereich ihres oberen Endes ist die Blende 10 zentral mit einer Aufhängung 13 verbunden. Diese ist gleichfalls plattenförmig ausgebildet und weist einen vertikal verlaufenden, länglichen Durchgangsschlitz 14 auf. Die Aufhängung 13 nimmt im Bereich ihres der Blende 10 abgewandten oberen Endes einen horizontal orientierten Zapfen 15 auf.

Mit der Lagerplatte 8 ist, oberhalb der Öffnung zum Austritt der Flüssigkeit, eine vertikal orientierte Leiste 16 verbunden, die gleichfalls mit einem vertikal orientierten Durchgangsschlitz 17 versehen ist. Eine entsprechende Leiste 18 mit Durchgangsschlitz 19 ist im Bereich ihres oberen Endes mittels eines Distanzbolzens 20 mit der Leiste 16 verbunden. Ein Distanzbolzen 21 verbindet die beiden Leisten 16 und 18 im Bereich ihres unteren Endes. Er durchsetzt, ausgehend von der Leiste 18, zunächst den Durchgangsschlitz 14 der Aufhängung 13 und dann eine Lagerbohrung einer Steuerelementscheibe 22, die bezüglich des Distanzbolzens 21 frei drehbar ist. Die Steuerelementscheibe 22 ist als Kreisscheibe ausgebildet. Sie weist bezüglich ihrer durch den Distanzbolzen 21 vorgegebenen Drehachse einen spiralförmig gestalteten Durchgangsschlitz 23 auf, der sich über einen Kreiswinkel von etwa 460° erstreckt, somit deutlich mehr als über einen Vollkreis. Ein mit dem freien oberen Ende der Aufhängung 13 verbundener Zapfen 15 greift in den Durchgangsschlitz 17 der Leiste 16 und den Durchgangsschlitz 19 der Leiste 18 ein. Eine Drehung der Steuerelementscheibe 22 um die Achse des Distanzbolzens 21 führt somit dazu, dass, entsprechend der Steigung der durch die Form des Durchgangsschlitzes 2 gebildeten Schnecke und unter Berücksichtigung der Drehrichtung der Steuerelementscheibe 22 die Blende 10 mehr oder weniger angehoben bzw. abgesenkt wird. Der große Schwenkbereich der Steuerelementscheibe 22, wie er insbesondere der Darstellung der Steuerelementscheibe 22 gemäß Figur 3 zu entnehmen ist, ermöglicht eine präzise Bewegung der Blende über die durch den Schwenkbereich von konkret 460° vorgegebenen Winkelabschnitte. Die Form des Durchgangsschlitzes 23 kann entsprechend den besonderen Anforderungen beim Regeln des konstanten Abflusses individuell gestaltet werden, wie es dem einen Endbereich des Durchgangsschlitzes 23 gemäß der Darstellung der Figur 13 zu entnehmen ist. Die dort zusätzlich veranschaulichten im Außenbereich der Steuerelementscheibe 22 angeordneten Kreislöcher 24 sind ausschließlich aus Gewichtsersparnisgründen vorgesehen.

Der Darstellung der Figur 3 ist zu entnehmen, dass sich der Durchgangsschlitz 23, bezogen auf die zentrale Bohrung 25 der Steuerelementscheibe 22, beginnend in einem definierten Abstand von der Bohrung 25 im Bereich eines der beiden Enden des Durchgangsschlitzes 23 stetig von der Bohrung 25 weiter entfernt, wobei etwa bei Erreichen eines Spiralwinkels von 360° sich der anschließende Abschnitt des Durchgangschlitzes 23 stärker von der Bohrung 25 entfernt, somit dieser Abschnitt eine stärkere Steigung von dem Zentrum der Steuerelementscheibe 22 weg aufweist. Im Bereich des anderen Endes weist der Durchgangsschlitz 23 einen Abschnitt 26 auf, der nahezu tangential ist. Ragt der Zapfen 15 im Bereich des Abschnitts 26 in den Durchgangsschlitz 23 befindet sich die Blende 10 in ihrer maximal abgesenkten Position. Beide Flanken 54 des Durchgangsschlitzes 23 bilden die Kurve.

### Nachfolgend wird der Antrieb für die Steuerelementscheibe 22 beschrieben:

Die Lagerplatte 8 weist neben den beiden Platten 5 und 7 einen Rücksprung auf, im Bereich dessen ein hydrostatischer Wandler 27 angeordnet ist. Dieser besitzt somit die Funktion eines in Abhängigkeit vom Flüssigkeitsdruck im Flüssigkeitsbehälter formveränderlichen Elements. Der Wandler 27 bzw. Druckaufnehmer weist einen Zylinder 28 und einen in diesem abgedichtet geführten Kolben 29 auf. Diesem ist eine Rollmembran 30 zugeordnet. Infolge dessen ist der Wandler 27 in einen oberen Zylinderraum 31 und einen unteren Zylinderraum 32 mittels des Kolbens 29 bzw. der Rollmembran 30 unterteilt. Der obere Zylinderraum 31 ist im Bereich seiner oberen Stirnwand 33 mit zwei Öffnungen 34 versehen, so dass die im oberen Zylinderraum 31 befindliche Flüssigkeit des Flüssigkeitsbehälters mit dem hydrostatischen Druck auf die Rollmembran 30 einwirkt. Im unteren Zylinderraum 32 sind mehrere Schraubenfedern 35 angeordnet, die sich an einer unteren Stirnwand 36 und dem Kolben 29 abstützen. Die Enden der Federn 35 sind in Rohransätzen 37 geführt, die mit der Stirnwand 33 bzw. dem Kolben 29 verbunden sind. Der untere Zylinderraum 32 ist geschlossen, er weist nur eine seitliche Öffnung 38 auf, in deren Bereich eine Leitung 39 seitlich über dem Zylinder 28 verbunden ist. Diese Leitung ist eine Luftleitung, sie liegt an Atmosphärendruck oder kann extern mit Druck beaufschlagt werden.

Im Kolben 29 ist zentral eine Kolbenstange 40 gelagert und fest mit diesem verbunden. Die Kolbenstange 40 ragt teilweise in den unteren Zylinderraum 32 und durchsetzt den oberen Zylinderraum 31. Sie ragt durch eine Öffnung in der Stirnwand 33 und ist nach oben herausgeführt. Ein außerhalb des Wandlers 27 angeordneter, mit der Kolbenstange 40 verbundener und auf dieser justierbarer Anschlag 41 dient dem Begrenzen der Bewegung der Kolbenstange 40 beim Einfahren des Kolbens 29.

Wie der Darstellung der Figuren 1 und 2 zu entnehmen ist, ist der hydrostatische Wandler 27 im Bereich seiner Stirnwand 36 auf der Grundplatte 9 platziert und mit dieser befestigt. Die Kolbenstange 40 ist im geringen Abstand, parallel zur Lagerplatte 8 positioniert und erstreckt sich vertikal. Mit dem freien oberen Ende der Kolbenstange 40 ist eine Klemmschelle 42 verbunden, mittels der ein Riemen 43, insbesondere ein Zahnriemen geklemmt ist. Dieser bildet ein Übertragungsmittel, das die geradlinige Bewegung der Kolbenstange 40 in eine Drehbewegung der Steuerelementscheibe 22 umwandelt. Dieses Übertragungsmittel ist als der in sich geschlossene, umgelenkte Seilzug in Art eines Riemens ausgebildet. Der Riemen 43 ist um zwei in senkrechter Flucht angeordnete, horizontale Achsen drehbare Rollen 44 geführte, die in der Lagerplatte 8 gelagert sind. Von diesen ist der Riemen 43 um die gleichfalls als Zahnrad ausgebildete, nicht näher gezeigte Rolle, die konzentrisch zur Bohrung 25 angeordnet mit der Steuerelementscheibe 22 verbunden ist, geführt.

Während die Ausführungsform nach den Figuren 1 und 2 die Blende in deren vollständig abgesenkten Position veranschaulicht, zeigt die andere Ausführungsform nach den Figuren 4 und 5 eine modifizierte Vorrichtung, bei der sich die Blende in deren vollständig angehobenen Position befindet. Der Aufbau dieser Vorrichtung ist grundsätzlich derselbe, wie derjenige nach den Figuren 1 bis 3 und 6, 7. Teile der Ausführungsform gemäß der Figuren 4 und 5, die mit denjenigen der anderen Ausführungsform gemäß der Figuren 1 bis 3, 6 und 7 in Funktion oder Aufbau übereinstimmen, sind der Einfachheit halber mit denselben Bezugsziffern bezeichnet. Die Abweichungen der Ausführungsform nach den Figuren 4 und 5 zu der anderen Ausführungsform stellen sich wie folgt dar:

Die Vertikalbewegung der Kolbenstange 40 wird auf das Ende eines Doppelhebels 45 übertragen, der um eine Achse 46 schwenkbar ist. Das der Achse zugeordnete Drehlager ist mit der Lagerplatte 8 verbunden. Das der Kolbenstange 40 abgewandte Ende des Hebels 45 nimmt schwenkbar, mit Spielausgleich in Längsrichtung des Hebels 45, eine nicht gezeigte Zahnstange auf, die vertikal verfahrbar in der Lagerplatte 8 gelagert ist. Mit dieser Zahnstange kämmt ein gleichfalls nicht gezeigtes Zahnrad, das konzentrisch zur Bohrung 25 der Steuerelementscheibe 22 mit dieser verbunden ist. Auf diese Weise wird die geradlinige Bewegung der Kolbenstange 40 in die Drehbewegung der Steuerelementscheibe 22 übersetzt. Die Aufhängung 13 ist als dreifach abgewinkeltes Bauteil ausgebildet, das demzufolge keinen Durchgangsschlitz 14 aufweist, sondern nur im Bereich des Endes, das der Blende 10 abgewandt ist, den Zapfen 15 aufweist, der in den Durchgangsschlitz 23 der Steuerelementscheibe 22 eingreift. An diesem Zapfen 15 greift ein Seil an, das, zunächst vertikal orientiert um den oberen Distanzbolzen 20 umgelenkt und von dort horizontal orientiert zur Seite geführt ist. Das Seil 47 wird dann um eine der Lagerplatte 8 drehbar gelagerte Rolle 48 umgelenkt, nach unten und es greift an dem diesem Bereich des Seils zugeordneten Seilende ein Gewicht 49 an. Die Gewichtskraft des Gewichts 49 ist so bemessen, dass sie im Wesentlichen dem Gesamtgewicht von Blende 10 und Aufhängung 13 entspricht, womit diese Bauteile quasi gewichtslos in den Führungen 12 gehalten sind. Hierdurch kann die Blende 10 mit geringstem Kraftaufwand durch Drehen der Steuerelementscheibe 22 gehoben und gesenkt werden.

Die Steuerkante 55 dieser Blende 10 ist im Wesentlichen gerade und horizontal angeordnet ausgebildet.

Bei dem hydrostatischen Wandler 27 kommt der Rollmembran 30 die Funktion zu, den Reibungswiderstand zwischen Zylinder 28 und Kolben 29 so gering wie möglich zu halten. Die Rollmembran 30 ist einerseits mit der Zylinderinnenwandung andererseits mit dem Kolben verbunden. Bei einer Bewegung des Kolbens 29 im Zylinder 28wird die Rollmembran 30 mehr oder weniger eingestülpt. Sie dichtet den Bereich zwischen Kolben und Zylinder zuverlässig ab.

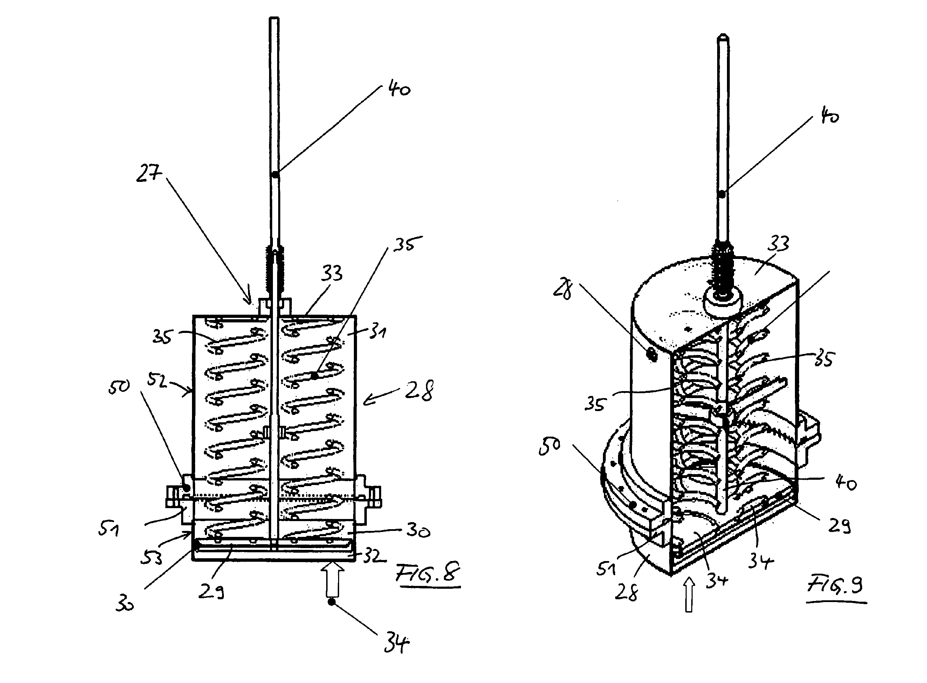

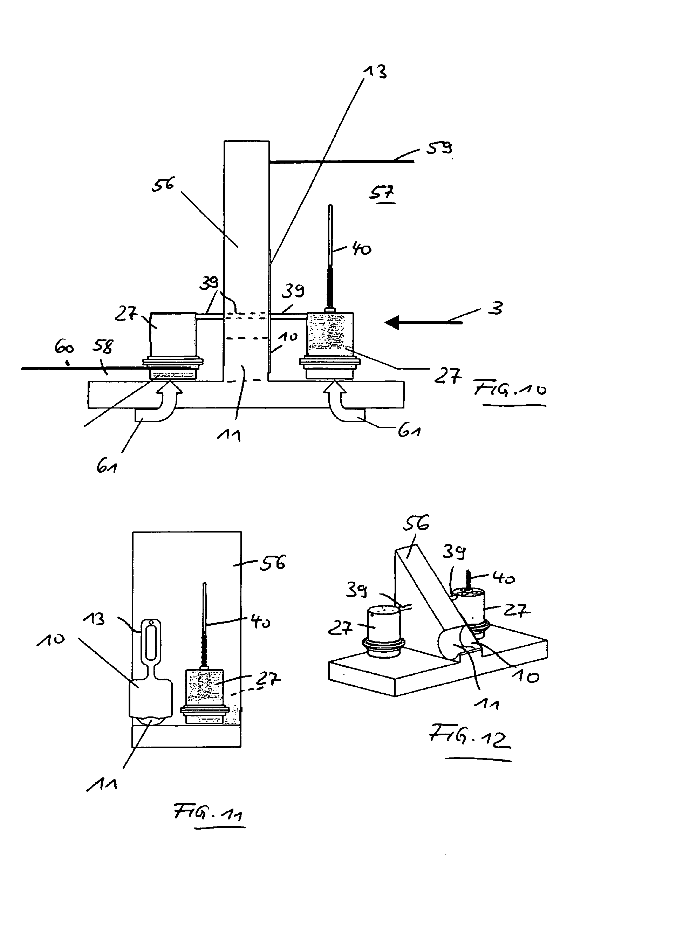

Die Figuren 8 und 9 veranschaulichen eine modifizierte Gestaltung des hydrostatischen Wandlers 27. Teile die bezüglich Aufbau oder Funktion denen gemäß der Ausführungsform des Wandlers nach den Figuren 6 und 7 entsprechen, sind der Einfachheit halber mit denselben Bezugsziffern bezeichnet. Die Abweichungen bei der Ausführungsform nach den Figuren 8 und 9 ergeben sich wie folgt:

Bei dem in den Figuren 8 und 9 veranschaulichten Wandler 27 erfolgt der Flüssigkeitseintritt in den Wandler von unten, somit durch die im Bereich der unteren Stirnwand 36 befindlichen Öffnungen 34. Veranschaulicht ist der Wandler 27 in der drucklosen Position. Der Kolben 29 befindet sich nahe der Stirnwand 36. Die Rollmembran 30 ist mit ihrem dem Kolben 29 fernen Bereich zwischen den beiden Flanschen 50 und 51 der Zylinderteile 52 und 53 eingeklemmt. Mehrere Schraubendruckfedern 35 stützen sich am Kolben 29 und der oberen Stirnwand 33 ab. Nicht veranschaulicht ist die die mit dem oberen Zylinderraum 31 zusammenwirkende Leitung 39.

Bei einer Verlegung der Auslauföffnung 6, womit keine Möglichkeit besteht, die Blende in die abgesenkte Position zu überführen, kann durch Beaufschlagen der Leitung 39 mit Druckluft über den Wandler 27 die Blende vollständig angehoben werden, so dass die Öffnung 6 freigespült wird und dann die Vorrichtung, nach Abklemmen der Druckluft, wieder im Standardbetrieb arbeiten kann.

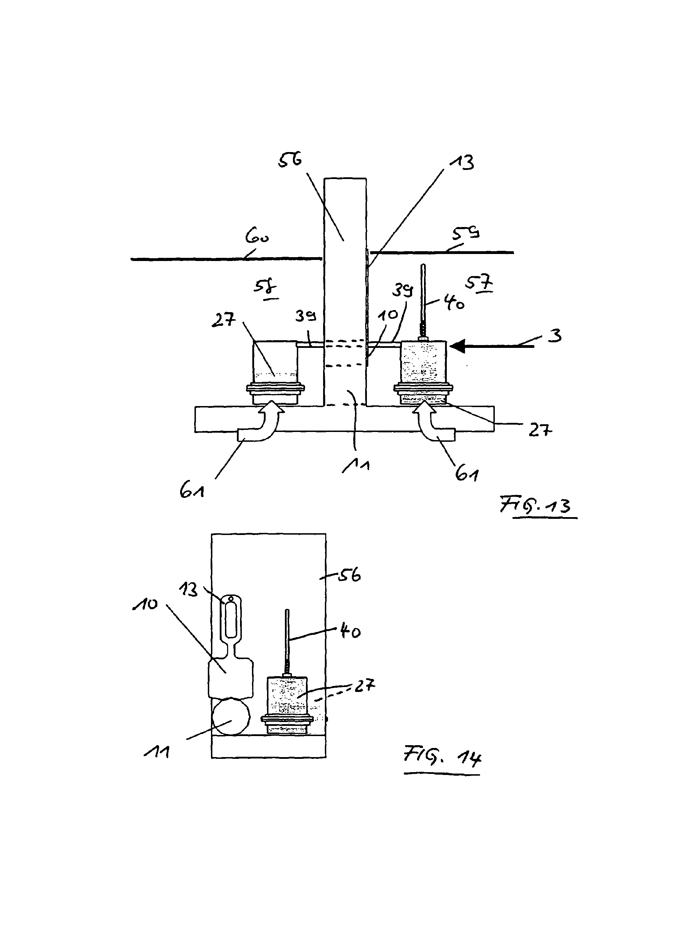

Die Figuren 10 bis 14 zeigen eine Einrichtung zur Aufrechterhaltung eines konstanten Abflusses der Flüssigkeit aus einem Bauwerk 56 mit Oberwasser 57 und Unterwasser 58. Der jeweilige Flüssigkeitsstand von Oberwasser 57 und Unterwasser 58 ist mit den Bezugsziffern 59 bzw. 60 veranschaulicht. Oberwasserseitig nimmt das Bauwerk 56 die erfindungsgemäße Vorrichtung, wie sie zu den Ausführungsformen gemäß der Figuren 1 bis 9 beschrieben ist, auf. Die Öffnungen 34 des hydrostatischen Wandlers 27 sind dabei auf dessen Unterseite angeordnet. Die Druckeinlassöffnung ist mit der Bezugsziffer 61 bezeichnet. Nicht näher veranschaulicht ist die Übertragung der Bewegung der Kolbenstange 40 auf die Blende 10 bzw. deren Aufhängung 13. Insofern wird auf die vorstehenden Ausführungen verwiesen. Unterwasserseitig ist ein entsprechender hydrostatischer Wandler 27 angeordnet. Im Sinne der Erläuterung der Ausführungsform gemäß der Figuren 5 bis 7 verbindet die Leitung 39 die beiden hydrostatischen Wandler 27. Die Druckeinlassöffnung des unterwasserseitigen hydrostatischen Wandlers 27 ist gleichfalls mit der Bezugsziffer 61 bezeichnet.

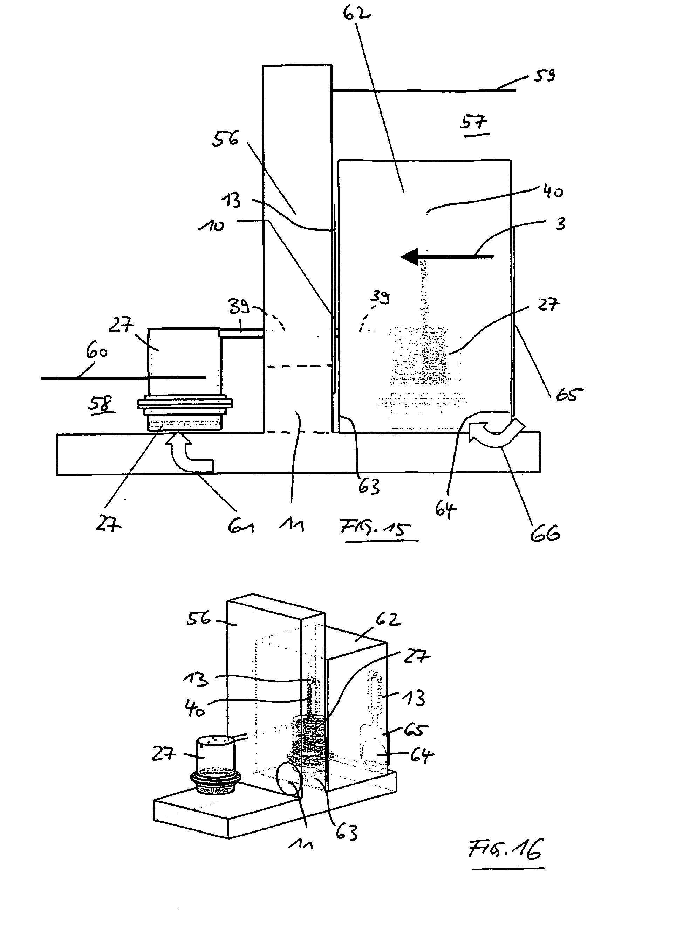

Die Figuren 10 bis 12 veranschaulichen die Situation des Normalbetriebs. Vom Oberwasser tritt die Flüssigkeit in das Unterwasser aus, so dass sich die Flüssigkeitsstände 59 und 60 einstellen. Der unterwasserseitige Wandler 27 ermittelt keinen erhöhten Druck. Demzufolge befindet sich die Blende 10 in der Regelstellung, die konstante Flüssigkeitsmenge pro Zeiteinheit Q_{ab} kann durch die definierte Regelöffnung, wie sie sich aus der Darstellung der Figur 11 ergibt, ungehindert fließen. Die Situation des Rückstaus ist in den Figuren 13 und 14 veranschaulicht. Der durch Rückstau erhöhte Flüssigkeitsstand 60 im Unterwasser 58 bedingt einen erhöhten Druckanstieg von der Leitung 39 aufgrund der Aktivierung des hydrostatischen Wandlers 27 des Unterwassers. Aufgrund dieses im Unterwasser 58 installierten Druckaufnehmers - hydrostatischen Wandlers - erfährt der im Oberwasser 57 installierte Druckaufnehmer - hydrostatischer Wandler 27 - eine Umkehrfunktion, so dass Q_{ab} konstant gehalten werden kann.

Figuren 15 und 16 veranschaulichen eine Einrichtung, die über derjenigen nach den Figuren 10 bis 14 dahingehend erweitert ist, dass mit dieser zusätzlich eine Verlegungsbeseitigung möglich ist. Im Unterschied zu der Ausführungsform nach den Figuren 10 bis 14 ist bei der Ausführungsform nach den Figuren 15 und 16 der dem Oberwasser 57 zugeordnete hydrostatische Wandler 27 in einem Schottbehälter 62, der die Funktion eines Reglergehäuses besitzt, angeordnet. Dieser Schottbehälter 62 ist mit einer Auslauföffnung 63 versehen, die der Regelöffnung 11 entspricht, ferner mit einer Zulauföffnung 64, die auf der der Auslauföffnung 63 abgewandten Seite des Schottbehälters 62 angeordnet ist und entsprechend der Auslauföffnung 63 gestaltet ist. Der Auslauföffnung 63 ist die zur erfindungsgemäßen Vorrichtung beschriebene Blende 10 zugeordnet. Der Zulauföffnung 64 ist eine weitere Blende 65 zugeordnet, die entsprechend der Blende 10 geführt ist und angesteuert wird. Die Blenden 10 und 65 werden über den innerhalb des Schottbehälters 62 angeordneten hydrostatischen Wandler 27 in der zur erfindungsgemäße Vorrichtung beschriebenen Art und Weise angesteuert, allerdings unabhängig angesteuert. Veranschaulicht sind der Einfachheit halber nur die Kolbenstange 40, die dem hydrostatischen Wandler 27 zugeordnet sind, und die Aufhängung 13 der jeweiligen Blende 10 bzw. 65.

Verlegt sich der Zugang 66 zum Schottbehälter 62, somit die Zulauföffnung 64 teilweise oder ganz, führt dies dazu, dass das Flüssigkeitsniveau 59 im Schottbehälter 62 sinkt. Der innerhalb des Schottbehälters 62 angeordnete hydrostatische Wandler 27 ermittelt den damit einhergehenden Druckabfall und regelt die beiden Blenden 10 und 65 im Sinne einer Öffnungsbewegung. Aufgrund des vergrößerten Regelquerschnitts der Zulauföffnung 64 wird die Verlegung weggeschwemmt und es regelt sich die Einrichtung in den Normalbetrieb.

## Patentansprüche

1. Vorrichtung (1) zur Regelung eines konstanten Abflusses aus einem Flüssigkeitsbehälter, insbesondere einem Regenrückhalteraum, mit einer Auslauföffnung (6) für die Flüssigkeit, wobei der Auslauföffnung (6) eine geradlinig bewegliche Blende (10) zugeordnet ist, die in Abhängigkeit vom Flüssigkeitsspiegel den Auslauf der Flüssigkeit aus dem Behälter regelt, wobei ein in Abhängigkeit vom Flüssigkeitsdruck oder dem Flüssigkeitseinstau im Flüssigkeitsbehälter positionsveränderliches Bauteil (40) die Blende (10) über eine Kurve (23) ansteuert und die Abblendbewegung der Blende (10) gegen eine Rückstellkraft erfolgt, sowie ein um eine Achse (21) drehbares Steuerelement (22) die Kurve (23) aufweist, wobei die Kurve (23) dem Umsetzen der Drehbewegung des Steuerelements (22) in die geradlinige Bewegung der Blende (10) dient, **dadurch gekennzeichnet, dass** sich die Kurve (23), bezogen auf die Steuerelementachse (21), über einen Winkel von mindestens 360° erstreckt.

2. Vorrichtung nach Anspruch 1, **dadurch gekennzeichnet, dass** sich die Kurve (23), bezogen auf die Steuerelementachse (21), über einen Winkel von 360° bis 460° erstreckt.

3. Vorrichtung nach Anspruch 1 oder 2, **dadurch gekennzeichnet, dass** das Steuerelement (22) als Scheibe mit spiralförmig zur Drehachse (21) der Scheibe (22) angeordneter Kurve (23) oder als rotationssymmetrischer Körper, mit am radialen Umfang angeordneter und sich in Radial- und Axialrichtung des Körpers erstreckender Kurve ausgebildet ist.

4. Vorrichtung nach einem der Ansprüche 1 bis 3, **dadurch gekennzeichnet, dass** das Steuerelement (22) eine umlaufende Nut oder einen umlaufenden Schlitz (23) aufweist und eine oder beide Flanken (54) des Schlitzes bzw. der Nut die Kurve (23) bildet.

5. Vorrichtung nach einem der Ansprüche 1 bis 4, **dadurch gekennzeichnet, dass** die Blende (10) vertikal verfahrbar geführt ist.

6. Vorrichtung nach Anspruch 5, **dadurch gekennzeichnet, dass** die Blende (10) eine untere Steuerkante (55) aufweist, die im wesentlichen gerade und horizontal angeordnet ausgebildet ist.

7. Vorrichtung nach einem der Ansprüche 4 bis 6, **dadurch gekennzeichnet, dass** die Steuerelementscheibe (22) um eine stationäre Achse (21) drehbar ist, und stationär ein Führungselement (18) mit vertikaler Nut bzw. vertikalem Schlitz (19) gelagert ist, sowie ein mit einer Aufhängung (13) der Blende (10) verbundener Zapfen (15) in die Nut bzw. den Schlitz (19) des Führungselements (18) und in die Nut bzw. den Schlitz (23) des Steuerelements (22) eingreift, wobei die Längsachse der Nut bzw. des Schlitzes (19) des Führungselements (18) durch die Drehachse der Steuerelementscheibe (22) verläuft.

8. Vorrichtung nach einem der Ansprüche 1 bis 7, **dadurch gekennzeichnet, dass** auf die Blende (10), mit Wirkrichtung in der Öffnungsrichtung der Blende (10), ein Gegengewicht (49) einwirkt.

9. Vorrichtung nach einem der Ansprüche 1 bis 8, **dadurch gekennzeichnet, dass** die Bestandteile der Vorrichtung (1) bildenden Bauteile in einem gemeinsamen Gestell (9, 8) gelagert sind.

10. Vorrichtung nach einem der Ansprüche 1 bis 9, **dadurch gekennzeichnet, dass** sie in einem Schottbehälter (62) angeordnet ist, der mit einer Zulauföffnung (64) für die Flüssigkeit und der Auslauföffnung (6, 63) für die Flüssigkeit versehen ist, wobei der Auslauföffnung (6, 63) die Blende (10) und der Zulauföffnung (63) eine weitere Blende (65) zugeordnet ist, sowie das positionsveränderliche Bauteil (40) beide Blenden ansteuert.

## Claims

1. Device (1) for regulating a constant outflow from a liquid tank, in particular a rain retention chamber, comprising an outlet opening (6) for the liquid, wherein the outlet opening (6) is assigned a shutter (10) which can move rectilinearly and which regulates the liquid outflow from the tank as a function of the liquid level, wherein a positionally variable component (40) which can vary its position as a function of the liquid pressure or the liquid build-up in the liquid tank activates the shutter (10) via a curve (23) and the shuttering movement of the shutter (10) occurs against a restoring force, and a control element (22) which can be rotated about an axis (21) comprises the curve (23), wherein the curve (23) serves to convert the rotary movement of the control element (22) into the rectilinear movement of the shutter (10), **characterized in that** the curve (23) extends, relative to the control element axis (21), over an angle of at least 360°.

2. Device according to Claim 1, **characterized in that** the curve (23) extends, relative to the control element axis (21), over an angle of from 360° to 460°.

3. Device according to Claim 1 or 2, **characterized in that** the control element (22) is designed as a disc having a curve (23) arranged spirally with respect to the axis of rotation (21) of the disc (22), or as a rotationally symmetrical body, with the curve arranged at the radial periphery and extending in the radial and axial directions of the body.

4. Device according to one of Claims 1 to 3, **characterized in that** the control element (22) has a circulating groove or a circulating slot (23), and one or both flanks (54) of the slot or the groove forms the curve (23).

5. Device according to one of Claims 1 to 4, **characterized in that** the shutter (10) is guided such that it can be displaced vertically.

6. Device according to Claim 5, **characterized in that** the shutter (10) has a lower control edge (55) which is formed substantially straight and arranged horizontally.

7. Device according to one of Claims 4 to 6, **characterized in that** the control element disc (22) can be rotated about a stationary axis (21), and a guide element (18) with a vertical groove or vertical slot (19) is mounted in a stationary manner, and a pin (15) connected to a suspension (13) of the shutter (10) engages in the groove or the slot (19) of the guide element (18) and in the groove or the slot (23) of the control element (22), wherein the longitudinal axis of the groove or the slot (19) of the guide element (18) extends through the axis of rotation of the control element disc (22).

8. Device according to one of Claims 1 to 7, **characterized in that** a counterweight (49) acts on the shutter (10), with its direction of action in the opening direction of the shutter (10).

9. Device according to one of Claims 1 to 8, **characterized in that** the components forming constituent parts of the device (1) are mounted in a common frame (9, 8).

10. Device according to one of Claims 1 to 9, **characterized in that** it is arranged in a bulkhead tank (62) which is provided with an inlet opening (64) for the liquid and with the outlet opening (6, 63) for the liquid, wherein the outlet opening (6, 63) is assigned the shutter (10) and the inlet opening (64) is assigned a further shutter (65), and the positionally variable component (40) activates both shutters.

## Revendications

1. Dispositif (1) pour assurer un débit constant hors d'un réservoir de liquide, en particulier d'une chambre de retenue d'eau de pluie, comportant une ouverture de sortie (6) pour le liquide, dans lequel un obturateur mobile en ligne droite (10) est associé à l'ouverture de sortie (6) pour réguler l'écoulement du liquide hors du réservoir en fonction du niveau de liquide, dans lequel une pièce (40) réglable en position en fonction de la pression de liquide ou de la hauteur de liquide dans le réservoir de liquide commande l'obturateur (10) par l'intermédiaire d'une came (23) et le mouvement d'obturation de l'obturateur (10) est effectué contre une force de rappel, et un élément de commande (22) tournant autour d'un axe (21) comprend la came (23), dans lequel la came (23) sert pour convertir le mouvement de rotation de l'élément de commande (22) en un mouvement rectiligne de l'obturateur (10), **caractérisé en ce que** la came (23) s'étend sur un angle d'au moins 360° par rapport à l'axe (21) de l'élément de commande.

2. Dispositif selon la revendication 1, **caractérisé en ce que** la came (23) s'étend sur un angle de 360° à 460° par rapport à l'axe (21) de l'élément de commande.

3. Dispositif selon la revendication 1 ou 2, **caractérisé en ce que** l'élément de commande (22) est réalisé en forme de disque avec une came (23) disposée en spirale par rapport à l'axe de rotation (21) du disque (22) ou en forme de corps à symétrie de révolution, avec une came disposée sur la périphérie radiale et s'étendant en direction radiale et axiale du corps.

4. Dispositif selon l'une quelconque des revendications 1 à 3, **caractérisé en ce que** l'élément de commande (22) présente une rainure périphérique ou une fente périphérique (23) et un ou les deux flancs (54) de la fente ou de la rainure forme la came (23).

5. Dispositif selon l'une quelconque des revendications 1 à 4, **caractérisé en ce que** l'obturateur (10) est guidé en déplacement vertical.

6. Dispositif selon la revendication 5, **caractérisé en ce que** l'obturateur (10) présente une arête de commande inférieure (55), qui est essentiellement rectiligne et disposée horizontalement.

7. Dispositif selon l'une quelconque des revendications 4 à 6, **caractérisé en ce que** le disque de l'élément de commande (22) est rotatif autour d'un axe stationnaire (21), et un élément de guidage (18) avec une rainure verticale ou une fente verticale (19) est monté de manière stationnaire, et un pivot (15) relié à une suspension (13) de l'obturateur (10) s'engage dans la rainure ou la fente (19) de l'élément de guidage (18) et dans la rainure ou la fente (23) de l'élément de commande (22), dans lequel l'axe longitudinal de la rainure ou de la fente (19) de l'élément de guidage (18) passe par l'axe de rotation du disque de l'élément de commande (22).

8. Dispositif selon l'une quelconque des revendications 1 à 7, **caractérisé en ce qu'**un contrepoids (49) agit sur l'obturateur (10), avec une direction d'action dans la direction d'ouverture de l'obturateur (10).

9. Dispositif selon l'une quelconque des revendications 1 à 8, **caractérisé en ce que** les pièces formant les composants du dispositif (1) sont montées dans un châssis commun (9, 8).

10. Dispositif selon l'une quelconque des revendications 1 à 9, **caractérisé en ce qu'**il est disposé dans un réservoir à cloison (62), qui est pourvu d'une ouverture d'entrée (64) pour le liquide et de l'ouverture de sortie (6, 63) pour le liquide, dans lequel l'obturateur (10) est associé à l'ouverture de sortie (6, 63) et un autre obturateur (65) est associé à l'ouverture d'entrée (64), et la pièce (40) réglable en position commande les deux obturateurs.
